Europäisches Patentamt

(19) European Patent Office

Office européen des brevets

(11) Numéro de publication : **0 085 592 B2**

(12) **NOUVEAU FASCICULE DE BREVET EUROPEEN**

(45) Date de publication du nouveau fascicule du brevet : **02.10.91 Bulletin 91/40**

(51) Int. Cl.[5] : **C01F 7/14, C01F 7/02**

(21) Numéro de dépôt : **83400096.0**

(22) Date de dépôt : **14.01.83**

(54) **Boehmites et pseudo-boehmites ultra-pures et leur procédé de fabrication.**

Le dossier contient des informations techniques présentées postérieurement au dépôt de la demande et ne figurant pas dans le présent fascicule.

(30) Priorité : **29.01.82 FR 8201391**

(43) Date de publication de la demande : **10.08.83 Bulletin 83/32**

(45) Mention de la délivrance du brevet : **02.07.86 Bulletin 86/27**

(45) Mention de la décision concernant l'opposition : **02.10.91 Bulletin 91/40**

(84) Etats contractants désignés : **BE CH DE FR GB IT LI NL**

(56) Documents cités :
**FR-A- 969 588**
**FR-A- 1 261 182**

(56) Documents cités :
**FR-A- 2 449 650**
**GB-A- 1 143 787**
**PL-A- 73 629**
**US-A- 2 898 307**
**US-A- 3 839 536**
**CHEMICAL ABSTRACTS, vol. 84, no. 6, 9 février 1976, page 342, no. 35867z, Columbus Ohio (US);**
**CHEMICAL ABSTRACTS, vol. 83, no. 8, 25 août 1975, page 276, no. 62890n, Columbus Ohio (US);**

(73) Titulaire : **RHONE-POULENC CHIMIE**
**25, quai Paul Doumer**
**F-92408 Courbevoie Cédex (FR)**

(72) Inventeur : **Trebillon, Emile**
**37, boulevard Victor Hugo**
**F-92200 Neuilly/S/Seine (FR)**

(74) Mandataire : **Esson, Jean-Pierre et al**
**Rhône-Poulenc Interservices Service Brevets Chimie 25, quai Paul Doumer**
**F-92408 Courbevoie Cedex (FR)**

EP 0 085 592 B2

EP 0 085 592 B2

## Description

PROCEDE DE PREPARATION DE BOEHMITES ET PSEUDO BOEHMITES ULTRAPURES

La présente invention concerne un procédé de fabrication de boehmites et de pseudo-boehmites ultra-pures à partir d'hydroxy- carbonate d'aluminium.

Les alumines peuvent se présenter sous différentes formes cristallisées selon leur procédé de préparation. Les applications industrielles de l'alumine exigent, dans certains cas, que celle-ci présente une surface active maximale et une dimension de cristallites la plus réduite possible.

Les alumines à forte surface spécifique sont souvent constituées par des monohydrates d'alumine. Elles sont généralement obtenues à partir des sels d'aluminium (nitrate, chlorures) par exemple tel que décrit dans le Brevet français n° 1 261 182. Les produits obtenus sort gérérallement utilisés comme agent durcisseur, agent de revêtement, matière première pour les catalyseurs, supports de catalyseur, agents de dessication.

Un des inconvénients principaux de ce procédé réside dans la nécessité d'utiliser comme source d'alumine des produits, tels que des solutions de chlorure ou de nitrate d'aluminium obtenues à partir d'aluminium métallique, dort la préparation est difficile et peu économique et dont les effluents présentent un risque écologique.

De plus, le caractère corrosif des anions mis en oeuvre entraîne souvent une pollution de l'alumine par libération des éléments métalliques constitutifs de l'appareillage.

L'anion le plus facile à déplacer de l'alumine et au moindre risque de toxicité est l'ion carbonate qui est thermiquement instable. On a donc songé à fabriquer de l'hydroxycarbonate d'aluminium par carbonatation des aluminates alcalins au moyen d'anhydride carbonique ou de bicarbonate alcalin. Le carbonate est ensuite déplacé afin d'obtenir de l'alumine.

Il est ainsi connu, d'après le brevet US-A-3 268 295, de fabriquer un hydrate d'alumine ayant la structure cristalline de la pseudo-boehmite et contenant entre 1,4 et 1,6 moles d'eau parmolécule d'alumine. Ce produit présente une surface spécifique supérieure à celle de l'alumine activée. Il est preparé par carbonatation de l'aluminate de sodium avec obtention d'un précipité d'un gel amorphe d'alumine, lavage de ce précipité puis décompositon thermique de celui-ci à une température supérieure à 100°C pour obtenir un hydrate d'alumine cristallisé. Le produit obtenu contrairement à la boehmite fibrillaire n'est pas dispersable dans l'eau. Selon ce document qui correspond également au brevet anglais GB-A-1 143 787, on décrit un procédé de production d'alumine hydratée comportant les étapes a) de précipitation d'un hydroxide d'aluminium amorphe par réaction entre un aluminate alcalin et un acide b) séparation du précipité obtenu lavage et redispersion en milieu aqueux c) évolution du précipité en milieu aqueux à température élevée de façon à convertir l'hydroxyde d'aluminium amorphe en hydrate d'alumine cristallisé.

Il est connu, d'après la demande de brevet européen n° 15 196 au nom de Rhône-Poulenc, de préparer de l'alumine partiellement sous forme de boehmite. Ce procédé utilise comme matière première une alumine active de structure mal cristallisée et/ou amorphe obtenue par déshydratation rapide des hydroxydes d'aluminium. Selon ce procédé, il s'avère relativement peu aisé d'obtenir des produits très purs.

On a décrit, par ailleurs CA 1976 vol. 84, page 342, un procédé de préparation d'alumine dans lequel de l'aluminate de sodium est précipité par $CO_2$. Le précipité est lavé puis traité avec une solution d'acide nitrique puis avec une solution d'ammoniaque. L'alumine est ensuite lavée, séchée puis formée par extrusion, séchée et calcinée.

Il est connu également du brevet français 1 261 182 de fabriquer de l'alumine fibreuse monohydratée possédant le réseau cristallin de la boéhmite au moyen d'un procédé consistant à préparer tout d'abord une dispersion aqueuse d'alumine puis à chauffer cette dispersion en présence d'un radical d'acide fort.

On connaît enfin par le brevet polonais 73 629, un procédé de préparation d'hydroxyde d'aluminium préparé à partir d'aluminate de sodium et de dioxyde de carbone, puis différents lavages conduits à température ambiante, au moyen d'acide nitrique puis d'ammoniaque.

La Demanderesse a trouvé maintenant que l'on pouvait préparer à partir d'hydroxycarbonates d'aluminium des boehmites et des pseudo-boehmites ultra-pures et homogènes avec des taux de transformation voisins de 100 %.

La présente invention concerne en effet un procédé de fabrication de boehmites et de pseudo-boehmites ultra-pures par réaction d'un aluminate alcalin avec de l'anhydride carbonique pour former un précipité d'aluminium amorphe, séparation du produit obtenu par filtration puis lavage de celui-ci et traitement du précipité lavé en trois étapes, une de mélange et deux de chauffage selon lesquelles, dans la deuxième étape, on chauffe le milieu réactionnel à une température inférieure à 90°C, pendant un temps d'au moins 5 minutes, puis, dans la troisième étape, on chauffe le milieu résultant de la deuxième étape à une température comprise entre 90°C et 250°C, ce procédé étant caractérisé en ce que dans la première étape on mélange le précipité lavé d'hydroxy-carbonate d'aluminium amorphe avec une solution aqueuse d'une base faible ou d'un sel dérivé de l'ammoniac

2

ou des amines ou comportant le cation aluminium, ou leurs mélanges ; ce mélange est effectué en versant la solution sur l'hydroxycarbonate, le pH du milieu ainsi constitué étant inférieur à 11, dans le mélange selon la première étape, le rapport molaire entre la somme des anions et des cations présents (à l'exclusion de $H^+$ et $OH^-$) et l'équivalent exprimé en $Al_2O_3$ du composé d'aluminium est compris entre 0,01 et 2 et de préférence entre 0,03 et 0,9.

Selon le procédé de l'invention, or prépare l'hydroxycarbonate d'aluminium en faisant réagir un aluminate d'un métal alcalin avec de l'anhydride carbonique pur ou dilué avec un gaz comme l'azote ou l'oxygène.

La concentration de la solution initiale d'aluminate alcalin peut être comprise entre 20 et 200g/l, exprimée en alumine $Al_2O_3$, et de préférence entre 40 et 150g/l, la pression partielle du gaz carbonique peut être maintenue entre 0,3 et 10 bars et de préférence entre 0,5 et 3 bars. La réaction peut être conduite suivant toute technique connue de précipitation d'un solide par réaction gaz-liquide soit par barbotage du gaz dans une solution d'aluminate soit par introduction progressive de la solution d'aluminate dans un milieu aqueux dans lequel on injecte le gaz.

La température et la durée de la réaction jouent un rôle très important sur l'évolution du produit obtenu, il est tout particulièrement intéressant de fixer la température entre 0 et 60°C et de préférence entre 20 et 50°C, le temps de réaction étant inférieur à 30 minutes.

Le pH final du milieu réactionnel doit être compris entre 7 et 11,5 et de préférence entre 9 et 11.

L'hydroxycarbonate d'aluminium obtenu se présente sous la forme d'une suspension d'un composé amorphe qui ne contient pratiquement aucune organisation cristalline de composés de l'aluminium telles que hydrargillite, bayerite, nordstrandite, scarbroïte, ou dawsonite. Au sens de l'invention, on entend par hydroxycarbonate d'aluminiun amorphe, un composé dont l'analyse aux rayons X ne présente aucune raie de diffraction caractéristique d'une phase cristalline quelconque.

Les conditions de réaction décrites ci-dessus permettent d'éviter la formation de ces produits cristallisés.

La suspension d'hydroxycarbonate d'aluminium amorphe obtenue est filtrée par des techniques bien connues de l'homme de l'art à une température comprise entre 0 et 60°C et de préférence entre 20 et 50°C.

Le précipité obtenu fortement chargé en ions alcalins doit être soigneusemert lavé avec de l'eau par des techniques de lavage bien connues de l'homme de l'art jusqu'à ce que les eaux de lavage présentent une résistivité supérieure à $10^5\Omega.cm$ mesurée à 20°C.

La présente invention consiste, dans une première étape, à mélanger le précipité d'hydroxycarbonate d'aluminium amorphe soigneusement lavé obtenu précédemment, avec une solution d'une base ou d'un sel ou de leurs mélanges, ce mélange est effectué en versant la solution sur l'hydroxycarbonate, le pH du milieu ainsi constitué étant inférieur à 11 mesuré à 20°C.

Les bases mises en oeuvre peuvent être des bases faibles solubles dans l'eau, telles que l'ammoniaque, les amines telles que les méthyl, éthyl ou propylamines, les méthyléthylpropylamines, les amino-alcools, les hydroxydes d'ammonium quaternaire et les produits susceptibles de se décomposer dans les conditions de réaction en donnant une base comme, par exemple, l'hexaméthylène tétramine ou l'urée. On peut mettre en oeuvre des mélanges de bases.

Les sels que l'on peut mettre en oeuvre selon l'invention, sont les sels solubles dans l'eau dérivés de l'ammoniac et des amines et ceux comportant le cation aluminium et comportant par exemple les anions nitrate, chlorure, formiate, acétate ou oxalate. On peut mettre en oeuvre des mélanges de sels.

Selon l'invention, on peut mettre en oeuvre des mélanges des différentes solutions de base ou de sels.

Selon un mode préféré de mise en oeuvre du procédé de l'invention, la première étape est avantageusement réalisée lorsque la concentration en compose d'aluminium exprimée en $Al_2O_3$ du mélange obtenu est comprise entre 20 et 400g/l exprimée en $Al_2O_3$ et de préférence lorsqu'elle est comprise entre 40 et 200g/l.

Par ailleurs, le mélange doit être tel que le rapport molaire entre la somme des anions et des cations présents (à l'exclusion de $H^+$ et $OH^-$) et l'équivalent exprimé en $Al_2O_3$ du composé d'aluminium présent est de préférerce compris entre 0,01 et 2 et plus particulièrement entre 0,03 et 0,9.

La présente invention consiste, dans une deuxième étape, à chauffer le milieu réactionnel provenant de la première étape à une température inférieure à 90°C pendant un temps d'au moins 5 minutes.

Le traitemert est opéré à une température n'excèdant pas 90°C et de préférence comprise entre 50 et 85°C perdant une durée comprise de préférence entre 5 minutes et 5 heures.

Sans limiter la présente invention à la théorie, on peut penser que la présence de l'anion apporté par le sel et la température du traitement (inférieur à 90°C) permettent un échange partiel entre l'anion rajouté et l'anion carborane qui était présent dans l'hydroxycarbonate. Dans le cas d'une base, celle-ci contribue à fixer l'ion carbonique de l'hydroxycarbonate. Cet échange permet d'éliminer en partie de l'anhydride carbonique qui peut éventuellement être recyclé vers l'opération initiale de carbonatation de l'aluminate alcalin.

La présente invention consiste, dans une troisième étape, à chauffer le milieu réactionnel provenant de la deuxième étape à une température comprise entre 90°C et 250°C et de préférence entre 100 et 160°C, pendant

3

10 minutes à 30 heures et de préférence entre 30 minutes et 10 heures. Dans ces conditions se développe un processus de cristallisation qui évolue vers la formation d'une boehmite ou d'une pseudo-boehmite.

En fonction des conditions de réaction : le rapport molaire entre la somme des anions et des cations introduits (à l'exception de $H^+$ et $OH^-$) et l'équivalent exprimé $Al_2O_3$ de l'hydroxycarbonate d'aluminium, le pH, la température et la durée de la réaction, les produits obtenus sont diversifiés et présentent un degré d'organisation cristalline plus ou moins élevé.

Le degré d'organisation cristalline grandit de la pseudo-boehmite jusqu'à la boehmite lorsque le rapport molaire anion/$Al_2O_3$ diminue et lorsque la température et la durée de chauffage augmentent.

Avec l'accroissement du degré d'organisation se précisent les raies de diffraction X tandis que la morphologie passe par les états caractéristiques de voiles, fibrilles, lattes, plaquettes et que s'accroît la taille des particules depuis quelques dizaines jusqu'à quelques milliers d'angstroms.

Selon le procédé de l'invention on peut obtenir des taux de transformation de l'hydroxycarbonate d'aluminium en boehmite et/ou pseudo-boehmite pratiquement quantitatifs.

Les boehmites et pseudo-boehmites peuvent être caractérisées par diffraction X (dans tout ce qui suit, les axes cristallographiques de référence sont ceux donnés par B.C. Lippens, thèse Delft, 1961) et par la microscopie électronique.

Ainsi qu'il a été décrit ci-dessus, selon les conditions de mises en oeuvre du procédé de l'invention, on obtient des boehmites. Ces boehmites sont constituées de morocristaux dont les morphologies dominantes, détectées par les diagrammes Debye-Scherrer, peuvent évoluer des formes fibrillaires aux formes lamellaires.

Les diagrammes Debye-Scherrer des boehmites fibrillaires, dépouillés par microdensitométrages sur (002), montrent que le produit est une boehmite présentant des monocristaux développés essentiellement dans une seule direction cristallographique dont la forme peut évoluer des lattes longues et étroites (réflexions (020) et (125) très atténuées, (105) normalement intense) jusqu'aux lattes longues et très étroites (réflexions (hkl) absentes, halo (012) et réflexion nette (200)). La direction d'allongement des monocristaux est celle des chaînes polymériques doubles imaginées pour la boehmite bien cristallisée et correspondrait à l'axe a. Suivant cette direction, les monocristaux ont des dimensions comprises entre environ 200 et 5000 Å (méthode de Warren et méthode B.E.T.) suivant les deux autres directions cristallographiques, les dimensions sont approximativement comprises entre 10 et 100 Å (estimées d'après les résultats de la méthode B.E.T).

Le diagramme de microdiffraction électronique des boehmites fibrillaires est caractéristique d'un produit souvent orienté par accolement des fibrilles en faisceaux (ou fibres).

Ces boehmites fibrillaires séchées à 110°C présentent des surfaces spécifiques comprises entre environ 50 et 600m²/g (mesurées par la méthode B.E.T).

Le diagramme Debye-Sherrer des boehmites lamellaires fait apparaître de nombreuses réflexions caractéristiques d'un faciès tabulaire présentant encore le clivage (002) correspondant aux plans d'oxhydriles de la boehmite bien cristallisée sous forme de :

– plaquettes rhombiques (réflexions (002) et (105) partiellement éteintes, (008) totalement éteinte),

– plaquettes rhombiques allongées probablement suivant la direction (110) (doublet (020), (105) non résolu, réflexions (002) et (008) normalement intenses),

– lattes longues et élargies (réflexions (002) partiellement éteinte, (008) et (105) totalement éteintes).

Par ailleurs, la méthode de Warren appliquée à ces boehmites lamellaires montre que les cristallites présentent au moins deux dimensions de croissance, comprises entre environ 50 et 5000 Å, l'épaisseur des cristallites constituant la troisième dimension étant généralement plus faible et environ comprise entre 20 et 100 Å.

Les boehmites lamellaires séchées à 110°C présentent des surfaces spécifiques comprises entre environ 50 et 300 m²/g (mesurées par la méthode B.E.T.).

Sans limiter la présente invention à la théorie, on peut penser que la forme des monocristaux de la boehmite obtenue peut être influencée notamment par la quantité d'anions adsorbée sur les différents plans cristallins et par la température de traitement.

Ainsi, d'une manière générale, on peut penser qu'à température constante, lorsque le pH du milieu de traitement diminue et que le rapport des concentrations molaires entre l'anion et l'alumine augmente, la forme des monocristaux de la boehmite obtenue évolue des formes lamellaires aux formes fibrillaires décrites ci-dessus.

Selon les conditions de mise en oeuvre du procédé de l'invention, on obtient également des pseudo-boehmites. Le degré d'organisation cristalline, croissant dans le sens pseudo-boehmite b, pseudo-boehmite a, boehmite, évolue en raison inverse du rapport anion/$Al_2O_3$ et en raison directe de la température et du temps.

Les données de diffraction X, de microdiffraction et de microscopie électronique ainsi que de spectrographie infrarouge concernant les pseudo-boehmites obtenues selon l'invention semblent indiquer qu'elles se présentent à l'état humide sous forme de flocons gonflés d'eau et instables et qu'au sein de ces flocons ne seraient développés au cours de la floculation que des microdomaines, pseudo-cristallisés, très imparfaits, fortement solvatés et reliés entre eux par des forces intermoléculaires telles que le gonflement du gel est toujours limité. L'étendue, l'orientation, le degré de solvatation et l'ordre cristallin de ces microdomaines sont variables suivant les conditions de précipitation, conduisant ainsi à divers produits présentant un même type de microstructure lâche et imparfaite, rappelant celle de la boehmite et distinguées, à l'aide de la diffraction X, comme pseudo-boehmite b, a ou recristallisée.

La pseudo-boehmite b désigne la structure la moins évoluée. Dans ce cas, les microdomaines pseudo-cristallisés sont fortement perturbés par l'insertion d'impuretés toujours présentes et spécialement, par référence à la boehmite, dans la direction c, perpendiculairement à la direction a d'allongement des molécules polymériques (absence du halo (002) et très faible intensité de tous les halos présents).

La pseudo-boehmite a ou normale, plus pure présente un état de cristallisation des microdomaines plus avancé que dans la forme b, et manifeste un ordre à très courte distance dans les 3 directions cristallographiques de référence (halo (002) assez intense situé entre 6,40 et 6,80 Å présent avec la série des halos en position des réflexions de la boehmite).

La pseudo-boehmite recristallisée, encore appelée "produit intermédiaire entre boehmite et gel de boehmite" (B.C. Lippens, thèse Delft. 1961) se distingue des pseudo-boehmites b et a, par les particularités suivantes :
– valeur d'interférence (002) comprise entre 6,25 et 6,40 Å (valeurs corrigées),
– amenuisement notable du halo (002) sous forme de barde,
– intensités fortement renforcées à l'endroit de la barde (002) et des halos (012), (014), (103) et (020) (105).

Les produits obtenus par séchage des suspensions obtenues selon le procédé de l'invertion présentent une surface spécifique comprise entre environ 50 et $600 m^2/g$. Le séchage peut être effectué par tout moyen et, en particulier, à l'étuve, dans un sécheur en lit fluide, dans un atomiseur. Pour les produits, constitués d'alumine sous forme de boehmite fibrillaire, le séchage peut être effectué de façon bien connue de l'homme de l'art en effectuant une distillation azéotropique après dispersion dans un milieu organique.

L'analyse des produits obtenus après sèchage et calcination à 600°C permet de déceler l'existerce d'alumine de transition de structure gamma ou pseudo-gamma, caractéristique de la filiation boehmitique.

Les produits obtenus après séchage et calcination à une température comprise entre environ 550 et 1100°C contiennent au moins l'une des phases prise dans le groupe constitué par gamma, pseudo-gamma, delta, thêta.

Les produits obtenus après séchage et calcination à une température supérieure à environ 1100°C contiennert de l'alumine alpha.

Du point de vue chimique, les boehmites et pseudo-boehmites obtenues selon le procédé de l'invention présentent un rapport molaires $H_2O/Al_2O_3$ compris entre 1 et 2, ce qui correspond à l'ensemble des structures pseudo-boehmitiques (rapport molaire compris entre environ 1,4 et 2) et boehmitiques (rapport molaire compris entre 1 et environ 1,4).

Un des intérêts du procédé selon la présente invention est qu'il permet d'obtenir notamment des boehmites ou des pseudo-boehmites ultra-pures dont la teneur en alcalins n'excède pas 0,005 % exprimée sous forme du rapport pondéral oxyde du métal alcalin/$Al_2O_3$.

De plus, les produits obtenus par le procédé de l'invention présentent une homogénéité de structure et de morphologie exceptionnelles ce qui provient notamment de la transformationcomplète de l'hydroxycarbonate d'aluminium amorphe initial en boehmite ou pseudo-boehmite.

On entend par homogénéité de structure, le fait que dans le produit obtenu, l'analyse aux rayons X ou par diffraction des électrons ne décèle l'existence que de boehmite et/ou de pseudo-boehmite.

On entend par homogénéité de morphologie, le fait que, dans le produit obtenu, l'analyse au microscope électronique à transmission décèle une unité de forme des cristallites.

Ces qualités sont particulièrement appréciables dans les applications nécessitant la mise en oeuvre de matières premières très pures comme dans le domaine de la catalyse et, en particulier, pour la fabrication des catalyseurs de conversion des hydrocarbures.

Les applications des boehmites et pseudo-boehmites obtenues selon le procédé de l'invertion, éventuellement après séchage et éventuellement calcination sont celles habituellement décrites pour les produits de la filiation boehmitique. Parmi ces applications, on peut citer notamment les applications en temps que charge, liant, épaississant, dispersant, agent filmogène, renforçateur, membrane et matière de base par la fabrication des supports de catalyseurs ou des catalyseurs et des céramiques.

Les exemples ci-après illustrent l'invention sans en limiter la portée.

Exemple I

Une solution filtrée d'aluminate de sodium présentant une concentration équivalente en $Al_2O_3$ 81g/l et $Na_2O$

61,2 g/l est introduite dans un réacteur en verre avec agitateur mécanique thermomètre et électrode de mesure du pH. Sous forte agitation, on fait passer un courant de $CO_2$ gazeux à pression atmosphérique, tel qu'un léger excédent s'échappe du réacteur. On laisse évoluer la température jusqu'à 40° C puis on la fixe à cette valeur par circulation externe d'eau froide. On coupe le courant de $CO_2$ lorsque, après 11 mn, le pH s'est abaissé à 9,5, et on agite encore 5 mn. Le précipité est séparé par filtration et lavé sur filtre à l'eau permutée à 30° C jusqu'à obtention d'un filtrat de résistivité $3.10^5$ohms.cm. Sur un prélèvement du gâteau de filtration séché à l'air à 30° C, on ne décèle en diffraction X aucune organisation cristalline. Le résidu de calcination à 1 000° C ($Al_2O_3$) est de 51,3 %.

Dans une première étape, le précipité d'hydroxycarbonate lavé obtenu est mélangé à la température de 20° C avec une solution aqueuse d'ammoniaque en quantités suffisantes pour obtenir dans le mélange, d'une part une concentration résultante en composé d'aluminium, exprimée en $Al_2O_3$ de 50g/l et, d'autre part, un rapport molaire entre la concentration en ion $NH_4^+$ (calculée en supposant complète l'ionisation de l'ammoniaque ou du produit résultat de sa réaction avec l'hydroxycarbonate) et la concentration en composé d'aluminium exprimée en $Al_2O_3$ de 0,20. Pour réaliser ce mélange, la solution ammoniacale est versée progressivement dans la suspension aqueuse d'hydroxycarbonate, sous forte agitation. Le pH du milieu aqueux ainsi obtenu est de 10,2.

Dans une deuxième étape, le milieu de traitement provenant de la première étape est chauffé à une température de 85° pendant un temps de 4h sous la pression atmosphérique.

Dans une troisième étape, le milieu de traitement provenant de la deuxième étape est chauffé à une température de 150° perdant 6h sous la pression autogène des réactifs.

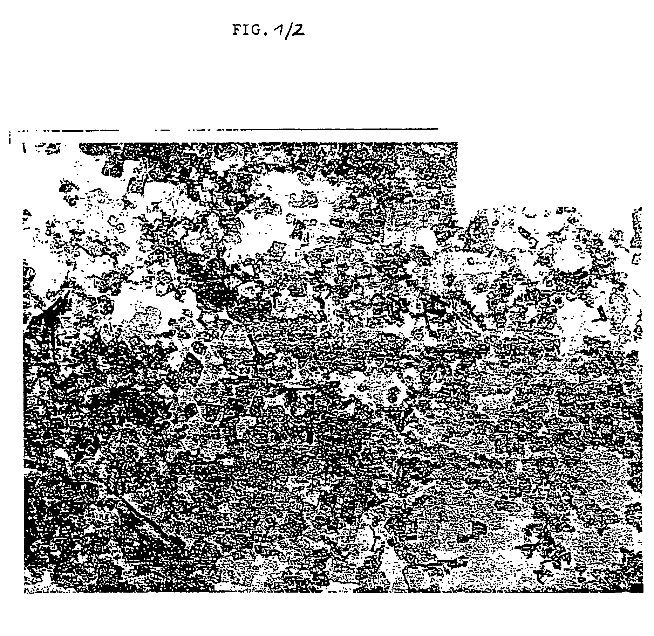

On obtient une suspension de boehmite lamellaire dont le rapport $H_2O/Al_2O_3$ correspond à 1,2 après séchage à 110°. La teneur en sodium exprimée par le rapport pondéral $Na_2O/Al_2O_3$ est de 15ppm. L'examen au microscope électronique (figure 1) montre qu'il s'agit d'une boehmite entièrement sous forme de lamelles rhombiques, en cristallites dont l'épaisseur est de 50 Å et les deux autres dimensions comprises entre 200 et 500 Å. On notera l'homogénéité de morphologie et de structure du produit obtenu.

Après calcination à 600° du produit séché, l'alumine obtenue est sous forme γ tétragonale et sa surface spécifique B.E.T. est de 160 m²/g.

### Exemple 2

Le précipité d'hydroxycarbonate lavé, obtenu comme dans l'exemple n° 1, est mélangé à 25° avec une solution aqueuse d'acétate d'ammonium en quantités suffisantes pour obtenir dans le mélange, d'une part une concentration résultante en composé d'aluminium exprimée en $Al_2O_3$ de 80g/l et, d'autre part, un rapport molaire entre la somme des ions acétate et des ions ammonium et la concentration en composé d'aluminium exprimée en $Al_2O_3$, de 0,15. Pour réaliser ce mélange, la solution saline est versée progressivement dans la solution d'hydroxycarbonate, sous forte agitation. Le pH du milieu aqueux obtenu est de 6,8.

Dans une deuxième étape, le milieu de traitement provenant de la première étape est chauffé à une température de 60° pendant un temps de 3h, sous la pression atmosphérique.

Dans une troisième étape, le milieu de traitement provenant de la deuxième étape est chauffé à une température de 120° pendant 2h sous la pression autogène des réactifs.

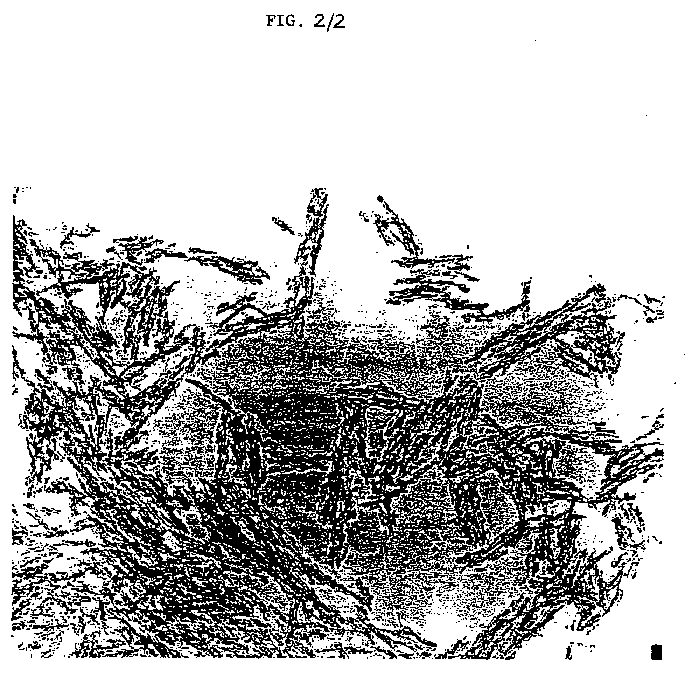

On obtient une suspension de boehmite lamellaire dont le rapport $H_2O/Al_2O_3$ correspond à 1,3 après séchage à 110°. La teneur en sodium, exprimée par le rapport pondéral $Na_2O/Al_2O_3$ est de 18ppm. L'examen au microscope électronique à transmission (figure 2) montre qu'il s'agit d'une boehmite entièrement sous forme de cristallites lamellaires d'environ 35 Å d'épaisseur et dont les deux autres dimensions sont voisines de 100 Å. Ces cirstallites se regroupent en amas allongés. On notera l'homogénéité de structure et de morphologie du produit obtenu.

Après calcination à 600° du produit séché, l'alumine obtenue est sous forme γ tétragonale et sa surface spécifique B.E.T. est de 270 m²/g.

### Example 3

Le précipité lavé obtenu comme dans l'exemple n°1 est mélangé à 20° avec de l'eau et une solution aqueuse de base ou de sel, de façon à réaliser les conditions du traitement en 3 étapes décrites dans le tableau 1.

Les caractéristiques des produits obtenus sont données dans le même tableau. La teneur en sodium, exprimée en $Na_2O$ pour 100g de $Al_2O_3$ est dans tous les cas inférieure à 30ppm.

6

TABLEAU 1

| | | | NH$_4$NO$_3$ | NH$_4$OH |
|---|---|---|---|---|
| **CONDITIONS DE TRAITEMENT** | 1ère étape | Agent de traitement | | |
| | | $C_{Al_2O_3}$ (g/l) | 80 | 80 |
| | | $\dfrac{C \text{ agent}}{C\,Al_2O_3}$ moles | 0,2 | 0,6 |
| | | pH résultant (20°) | 6,2 | 10,4 |
| | 2ème étape | Température (°C) | 70 | 85 |
| | | Durée (h) | 2 | 4 |
| | 3ème étape | Température (°C) | 120 | 160 |
| | | Durée (h) | 2 | 4 |
| **CARACTERISTIQUES DES PRODUITS OBTENUS** | Microscopie électronique à transmission | Etat de cristallisation morphologie | lamelles réunion | lamelles d'inflexion |
| | Dimensions en Å | Largeur | 100 – 150 | 100 – 700 |
| | | Longueur | 150 – 200 | 100 – 700 |
| | | Epaisseur | 25 | 50 |
| | | $\dfrac{H_2O}{Al_2O_3}$ (moles) | 1,35 | 1,1 |
| | | Surface spécifique après calcination à 600° (m$^2$/g) | 270 | 100 |

## Revendications

1. Procédé de fabrication de boehmite et de pseudo-boehmite ultra-pures par réaction d'un aluminate alcalin avec de l'anhydre carbonique pour former un précipité d'hydroxycarbonate d'aluminium amorphe, séparation du précipité obtenu par filtration, puis lavage de celui-ci et traitement du précipité lavé en trois étapes, une de mélange et deux de chauffage selon lesquelles, dans la deuxième étape, on chauffe le milieu réactionnel à une température inférieure à 90°C pendant un temps d'au moins 5 minutes, puis dans la troisième étape, on chauffe le milieu résultant de la deuxième étape à une température comprise entre 90°C et 250°C, le procédé étant caractérisé en ce que dans une première étape, on mélange le précipité lavé d'hydroxycarbonate d'aluminium amorphe avec une solution aqueuse d'une base faible ou d'un sel dérivé de l'ammoniac ou des amines ou comportant le cation aluminium, ou de leurs mélanges ; ce mélange est effectué en versant la solution sur l'hydroxycarbonate, le pH du milieu ainsi constitué étant inférieur à 11 ; dans le mélange selon la première étape, le rapport molaire entre la somme des anions et des cations présents (à l'exclusion de $H^+$ et $OH^-$) et l'équivalent exprimé en $Al_2O_3$ du composé d'aluminium est compris entre 0,01 et 2 et de préférence entre 0,03 et 0,9.

2. Procédé selon la revendication 1 caractérisé en ce que la base mise en oeuvre dans la première étape est une base faible soluble dans l'eau et de préférence choisie parmi : l'ammoniaque, les amines tels que les méthyléthylpropylamines, les amino-alcools tels que les mono, di ou tri éthanol-amines et l'amino-2-propanol, les hydroxydes d'ammonium quaternaire et les produits susceptibles de se décomposer dans les conditions de réaction en donnant une base comme, par exemple, l'hexaméthylène tétramine ou l'urée.

3. Procédé selon la revendication 1 caractérisé en ce que le sel mis en oeuvre dans la première étape est choisi parmi les sels dérivés de l'ammoniac et des amines et ceux comportant la cation aluminium et comportant les anions nitrate, chlorure, formiate, acétate ou oxalate.

4. Procédé selon l'une des revendications 1 à 3 caractérisé en ce que la température de traitement de la deuxième étape est comprise entre 50 et 85°C, la durée de traitement étant comprise entre 5 minutes et 5 heures.

5. Procédé selon l'une des revendication 1 à 3 caractérisé en ce que, dans la première étape, la concentration en composé d'aluminium exprimée en $Al_2O_3$ du mélange est comprise entre 20 et 400/l exprimée en $Al_2O_3$ et de préférence comprise entre 40 et 200 g/l.

6. Procédé selon l'une des revendication 1 à 3 caractérisé en ce que la température de chauffage selon la troisième étape est comprise entre 100 et 160°, la durée de chauffage étant comprise entre 10 minutes et 30 heures et de préférence entre 30 minutes et 10 heures.

## Claims

1. Processs for the manufacture of boehmite and pseudoboehmite which are ultrapure by reaction of an alkali metal aluminate with carbon dioxide to form a precipitate of amorphous aluminium hydroxycarbonate, separation of the precipitate obtained by filtration and then washing whereof and treatment of the washed precipitate in three steps, one of mixing and two of heating, according to which steps, in the second step the reaction mixture is heated at a temperature below 90°C during a period of at least 5 minutes, and then in the third step the mixture resulting from the second step is heated to a temperature between 90°C and 250°C, the process being characterised in that in a first step the washed precipitate of amorphous aluminium hydroxycarbonate is mixed with an aqueous solution of a weak base or of a salt derived from ammonia or amines or comprising the aluminium cation, or mixtures thereof; this mixing is produced by pouring the solution onto the hydroxycarbonate, the pH of the mixture thus formed being below 11; in the mixture according to the first step, the molar relationship between the total of the anions and the cations present (excluding $H^+$ and $OH^-$) and the equivalent of the aluminium compound, expressed as $Al_2O_3$, is between 0.01 and 2 and preferably between 0.03 and 0.9.

2. Process according to Claim 1, characterised in that the base used in the first step is a water-soluble weak base and is preferably chosen from: aqueous ammonia, amines such as methylethylpropylamines, amino alcohols such as mono-, di- or triethanolamines and 2-amino-propanol, quaternary ammonium hydroxides and products capable of decomposing under the reaction conditions to give a base such as, for example, hexamethylenetetramine or urea.

3. Process according to Claim 1, characterised in that the salt used in the first step is chosen from the salts derived from ammonia and amines and those containing the aluminium cation and containing the nitrate, chloride, formate, acetate or oxalate anions.

4. Process according to one of Claims 1 to 3, characterised in that in the second step the treatment temperature is between 50 and 85°C, the time of treatment being between 5 minutes and 5 hours.

5. Process according to one of Claims 1 to 3, characterised in that, in the first step, the concentration of aluminium compound, expressed as $Al_2O_3$, of the mixture, is between 20 and 400 g/l, expressed as $Al_2O_3$, and preferably between 40 and 200 g/l.

6. Process according to one of Claims 1 to 3, characterised in that the temperature of heating according to the third step is between 100 and 160°C, the time of heating being between 10 minutes and 30 hours and preferably between 30 minutes and 10 hours.

## Patentansprüche

1. Verfahren zur Herstellung von ultra-reinem Boehmit und Pseudoboehmit durch Reaktion eines Alkaliluminats mit Kohlendioxid zu einer amorphen Fällung von Aluminiumhydroxycarbonat, Abtrennung der erhaltenen Fällung durch Filtration, anschließendes Waschen und Behandlung der gewaschenen Fällung in drei Stufen, einer Misch- und zwei Heizstufen, wobei man in der zweiten Stufe das Reaktionsgemisch mindestens 5 min auf eine Temperatur unter 90°C erwärmt, dann in einer dritten Stufe das erhaltene Gemisch der zweiten Stufe auf eine Temperatur zwischen 90°C und 250°C erwärmt, wobei das Verfahren dadurch gekennzeichnet ist, daß man in der ersten Stufe die gewaschene Fällung von amorphem Aluminiumhydroxycarbonat mit einer wäßrigen Lösung einer schwachen Base oder eines vom Ammoniak oder den Aminen abgeleiteten Salzes, eines Aluminiumsalzes oder ihren Mischungen mischt, wobei die Mischung durch Aufgießen der Lösung auf das Hydroxycarbonat hergestellt wird, der pH-Wert des so hergestellten Gemischs unter 11 liegt und in der Mischung nach der ersten Stufe das Molverhältnis zwischen der Summe der Anionen und der anwesenden Kationen (mit Ausnahme von $H^+$ und $OH^-$) und dem Äquivalent der Aluminiumverbindung, ausgedrückt als $Al_2O_3$, zwischen 0,01 und 2, vorzugsweise zwischen 0,03 und 0,9 liegt.

2. Verfahren nach Anspruch 1, dadurch gekennzeichnet, daß die in die erste Stufe eingesetzte Base eine schwache wasserlösliche Base ist, die vorzugsweise ausgewählt wird unter: Ammoniak, den Aminen wie Methylethylpropylamin, den Aminoalkoholen, wie Mono-, Di- oder Triethanolamin und 2-Aminopropanol, den quartären Ammoniumhydroxiden und den Produkten, die in der Lage sind, sich unter den Reaktionsbedingungen zu einer Base zu zersetzen, wie z.B. Hexamethylentetramin oder Harnstoff.

3. Verfahren nach Anspruch 1, dadurch gekennzeichnet, daß das in die erste Stufe eingesetzte Salz ausgewählt wird unter den Salzen, die vom Ammoniak und den Aminen abgeleitet sind und denjenigen, die das Aluminiumkation und die Anionen Nitrat, Chlorid, Formiat, Acetat oder Oxalat enthalten.

4. Verfahren nach einem der Ansprüche 1 bis 3, dadurch gekennzeichnet, daß die Behandlungstemperatur der zweiten Stufe zwischen 50 und 85°C und die Dauer der Behandlung zwischen 5 min und 5 h liegt.

5. Verfahren nach einem der Ansprüche 1 bis 3, dadurch gekennzeichnet, daß in der ersten Stufe die Konzentration an Aluminiumverbindung, ausgedrückt als $Al_2O_3$, in der Mischung zwischen 20 und 400 g/l, ausgedrückt als $Al_2O_3$, vorzugsweise zwischen 40 und 200 g/l liegt.

6. Verfahren nach einem der Ansprüche 1 bis 3, dadurch gekennzeichnet, daß die Heiztemperatur während der dritten Stufe zwischen 100 und 160°C und die Heizdauer zwischen 10 min und 30 h, vorzugsweise zwischen 30 min und 10 h liegt.

FIG. 1/2

FIG. 2/2